# EUROPÄISCHE PATENTSCHRIFT

(11) **EP 2 591 542 B1**
(45) Veröffentlichungstag und Bekanntmachung des Hinweises auf die Patenterteilung: **06.09.2017**
(21) Anmeldenummer: 11738664.9
(22) Anmeldetag: 08.07.2011
(51) Int. Cl.: H02K 9/06, H02K 5/20

(54) **ELEKTRISCHE MASCHINE**
ELECTRICAL MACHINE
MACHINE ÉLECTRIQUE

(30) Priorität: 09.07.2010 DE 102010026682
(43) Veröffentlichungstag der Anmeldung: 15.05.2013
(73) Patentinhaber: Schabmüller GmbH, 92334 Berching (DE)
(72) Erfinder: STUTZ, Werner, 85049 Ingolstadt (DE)
(74) Vertreter: Leske, Thomas
(86) Internationale Anmeldenummer: PCT/EP2011/061662
(87) Internationale Veröffentlichungsnummer: WO 2012/004393

(56) Entgegenhaltungen:
- US-A- 3 719 843
- US-A- 3 749 953
- US-A- 5 925 960
- US-A1- 2006 012 254

## Beschreibung

Die Erfindung betrifft eine elektrische Maschine, insbesondere die Kühlung einer elektrischen Maschine.

Elektrische Maschinen, welche elektrische Energie in Rotationsenergie bzw. Rotationsenergie in elektrische Energie umwandeln, sind aus dem Stand der Technik bekannt. Derartige Maschinen weisen oftmals einen auf einer Welle sitzenden Rotor auf. Der Rotor weist je nach Art der elektrischen Maschine beispielsweise Permanentmagnete oder Wicklungen aus einem elektrisch leitenden Material auf. Der Rotor ist bei solchen elektrischen Maschinen in der Regel von einem Stator umgeben. Der Stator weist in Umfangsrichtung sogenannte Statorwicklungen aus einem elektrisch leitenden Material auf. Der Stator weist an seiner Innenseite in Radial- und Axialrichtung verlaufende Nuten auf, in welchen die Statorwicklungen verlaufen. Stirnseitig werden die einzelnen Statorwicklungen aus einer der Nuten heraus- und in eine andere Nut hineingeführt, um so verschiedene Nuten miteinander zu verbinden. Die Wickeltechnik der Statorspulen ist dabei derart ausgeführt, dass zur elektrischen Isolation ein Abstand zwischen der Stirnseite des Rotors und den aus den Nuten herausgeführten Teilen der Statorwicklung besteht. Diese, aus den Nuten herausragenden Teile der Statorwicklung werden auch als Wickelköpfe bezeichnet. Häufig wird als elektrisch leitendes Material für die Statorwicklungen und gegebenenfalls für die Rotorwicklungen Kupfer verwendet.

Eine elektrische Maschine ist je nach Ausgestaltung des Rotors beispielsweise als Synchron- oder Asynchronmaschine ausführbar. Asynchronmaschinen weisen einen Rotor mit Kurzschlusswicklungen auf, welche über einen Kurzschlussring an der Stirnseite des Rotors realisiert werden. Derartige Rotoren werden auch als Kurzschlussläufer bezeichnet. Bei einer Synchronmaschine stellt der Rotor ein Magnetfeld bereit, beispielsweise durch am Rotor angeordnete Permanentmagnete.

Entscheidenden Einfluss auf das Leistungsverhalten hat dabei das Thermomanagement in der elektrischen Maschine, wobei die Temperatur an stark beanspruchten Teilen wie beispielsweise den Wickelköpfen oder dem Kurzschlussring besonders relevant ist. Zur Kühlung der elektrischen Maschinen sind im Gehäuse axial verlaufende Lüftungsschlitze angebracht. Durch diese findet ein Austausch von Kühlmedium statt. Zur Umwälzung des Kühlmediums, beispielsweise von Luft, werden im Stand der Technik häufig Flügel am Rotor angebracht. Bei Asynchronmaschinen werden derartige Rotorflügel häufig einstückig mit dem Kurzschlussring ausgeführt. Solche Flügel erstrecken sich sowohl in axialer als auch in radialer Richtung. Durch die Rotation der Lüfterflügel mit dem Rotor im Betrieb der elektrischen Maschine wird das Kühlmedium in radialer Richtung nach außen gefördert, wodurch ein Unterdruck am Innendurchmesser der Rotorflügel entsteht. Das radial geförderte Kühlmedium strömt dabei in Richtung der Wickelköpfe. Aufgrund der hier entstehenden Verwirbelungen wird ein großer Teil des Kühlmediums vom Unterdruck, welcher an der Innenseite der Lüfterflügel entsteht, wieder angesaugt. Somit entsteht im Bereich der Lüfterflügel eine Kurzschlussströmung, wobei das Kühlmedium von dem Lüfter umgewälzt bzw. im Kreis d.h. zirkulär gefördert wird. Nur ein geringer Teil des vom Lüfter geförderten Kühlmediums wird an den Wickelköpfen und/oder dem Kurzschlussring vorbei aus dem Gehäuse der elektrischen Maschine herausgefördert. Entsprechend wird auch nur ein geringer Anteil an frischem Kühlmedium vom Lüfter angesaugt.

Somit besteht die Aufgabe der vorliegenden Erfindung, eine verbesserte Kühlung einer elektrischen Maschine bereitzustellen.

Die Aufgabe wird durch eine elektrische Maschine gemäß Anspruch 1 gelöst. Weitere vorteilhafte Fortbildungen ergeben sich aus den Unteransprüchen.

Eine erfindungsgemäße elektrische Maschine weist einen Rotor, einen Stator mit umfänglich angeordneter Statorwicklung aus einem elektrischen leitenden Material und ein Gehäuse mit einer ersten und einer zweiten sich im Umfangsrichtung erstreckenden Öffnung auf. Am Rotor ist stirnseitig ein Lüfter angeordnet, der drehfest mit diesem verbunden ist und sich radial erstreckende Flügel aufweist. Vom Lüfter wird ein Kühlmedium über die erste Öffnung angesaugt und über die zweite Öffnung ausgeblasen, wobei das Kühlmedium zwischen der ersten und weiten Öffnung zügig zumindest an Teilbereichen der Statorwicklung vorbeigefördert wird.

Die erfindungsgemäße elektrische Maschine ist abhängig von der jeweiligen Anwendung als Motor und/oder als Generator betreibbar und weist aus dem Stand der Technik bekannte Ausführungsformen des Rotors bzw. des Stators auf. Für den Erfindungsgedanken ist unerheblich, ob es sich bei der elektrischen Maschine beispielsweise um eine Synchron- oder Asynchronmaschine handelt. Die Statorwicklung ist vorzugsweise durch Nuten an der Innenseite des Stators geführt. Je nach Ausführungsform und Einsatzbereich der elektrischen Maschine variiert die Anzahl der Nuten. Die Statorwicklungen werden an der Stirnseite des Stators aus diesen Nuten herausgeführt und je nach Art der Wickeltechnik in eine der anderen Nut wieder eingeführt. In Bezug auf die Wahl des elektrisch leitenden Materials für die Rotor- bzw. Statorwicklung bestehen keine Einschränkungen für den vorliegenden Erfindungsgedanken. Zur elektrischen Isolation zwischen der Statorwicklung und dem Stator besteht ein Abstand an der Stirnseite zwischen Stator und Statorwicklung. Die aus dem Stator an dessen Stirnseiten überstehenden Bereiche der Statorwicklung werden auch als Wickelköpfe bezeichnet. Zwischen den einzelnen, aus den Nuten des Stators austretenden Statorwicklungen und dem Stator selbst entstehen Zwischenräume. Diese Zwischenräume haben einen nicht unerheblichen Einfluss auf das Strömungsverhalten des Kühlmediums, welches vom Lüfter gefördert wird.

Als Kühlmedium dient in der Regel ein gasförmiges Medium wie beispielsweise die Umgebungsluft. Es besteht jedoch auch die Möglichkeit, dass unter speziellen Randbedingungen verschiedene Gase oder Gas-Flüssigkeits-Gemische wie beispielsweise ein Öl-Luft-Gemisch verwendbar sind. Der am Rotor stirnseitig angeordnete Lüfter verfügt über einzelne Flügel. Die Flügel erstrecken sich vorwiegend in radialer Richtung und weisen somit eine in radialer und axialer Richtung sich erstreckende Flügelfläche auf. In einer einfachen Ausführungsform ist diese Flügelfläche als plane Ebene ausgeführt. Die Flügel und somit die Flügelfläche sind jedoch zusätzlich in Umfangsrichtung gekrümmt ausführbar, beispielsweise als eine zur Radialrichtung geneigte Ebene oder als konkave bzw. konvexe Ebene. Der Lüfter ist vorzugsweise einstückig mit einem Teil des Rotors, beispielsweise mit dem Kurzschlussring einer Asynchronmaschine, ausgeführt. Ein solches Bauteil ist beispielsweise als Gussteil einstückig ausführbar. Der Lüfter ist jedoch auch mehrteilig ausführbar und beispielsweise mit dem Rotor verschraubbar oder über eine formschlüssige Verbindung drehfest mit diesem verbindbar.

Das Gehäuse, welches beispielsweise über einen Zentrierbund mit dem Stator verbunden ist, weist die erste und die zweite Öffnung auf und umschließt in der Regel die Wickelköpfe des Stators sowie den Lüfter. Zusätzlich ist in das Gehäuse zumindest ein Teil der Lagerung der Welle und damit des Rotors der elektrischen Maschine integrierbar. Die erste und die zweite Öffnung im Gehäuse erstrecken sich dabei in Umfangsrichtung. Dabei ist unerheblich, ob sich die Öffnungen am Umfang oder einer Stirnseite des Gehäuses befinden. Die Ausgestaltung der Öffnungen wird maßgeblich von der Strömungsmechanik insofern bestimmt, als dass die Öffnungen strömungstechnisch optimiert sind. Vorzugsweise hat jede erste Öffnung eine entsprechende zweite Öffnung, welche sich über einen entsprechenden Umfangsbereich des Gehäuses erstreckt. Die erste Öffnung, über welche das Kühlmedium ansaugbar ist, ist sowohl am statorseitigen Ende des Gehäuses als auch am freien Ende des Gehäuses plazierbar. Für die erfindungsgemäße Lehre spielt das Ansaugen über die erste Öffnung und zügige Ausblasen über die zweite Öffnung eine maßgebliche Rolle. Unter zügig wird verstanden, dass die ersten und zweiten Öffnungen derart angeordnet sind und die Strömungsgeometrie derart ausgestaltet ist, dass das Kühlmedium ohne große Verweilzeit das Gehäuse durchströmt. Insbesondere soll die Geometrie dahingehend optimiert sein, dass keine Kurzschlussströmungen oder den Luft- bzw. Kühlmediumsaustausch verhindernden Wirbel in nennenswertem Umfang entstehen und ein möglichst großer Teil des Kühlmediums ausgetauscht wird. Das bedeutet, dass "zügig" sich auf den Strömungsweg und die Strömungszeit bezieht. Dabei ist unerheblich, ob das Kühlmedium vor Eintritt in den Lüfter oder nach Austritt aus dem Lüfter an den zu kühlenden Teilen der elektrischen Maschine wie beispielsweise den Wickelköpfen oder dem Kurzschlussring vorbeigeführt wird. Das Kühlmedium wird von der ersten Öffnung durch Zwischenräume zwischen den Wickelköpfen und dem Stator zur zweiten Öffnung gefördert. Ein solches Strömungsbild ist dadurch darstellbar, dass Luft über den Lüfter von der ersten Öffnung angesaugt wird und der Lüfter derart angeordnet und ausgestaltet ist, dass das aus dem Lüfter austretende Kühlmedium in diese Zwischenräume gefördert wird. Das Kühlmedium wird zwischen der ersten und der zweiten Öffnung am Kurzschlussring des Rotors vorbeigefördert. Eine solche Kühlmediumsströmung ist dadurch darstellbar, dass das Kühlmedium nach dem Austritt aus dem Lüfter zwischen Wickelkopf und Kurzschlussring hindurch zu den Zwischenräumen zwischen den Wickelköpfen und dem Stator und weiter zur zweiten Öffnung gefördert wird. Der Lüfter weist einen Leitring auf, welcher in radialer Richtung außerhalb der Flügel angeordnet ist. Ein solcher, mit einem Leitring ausgeführter Lüfter kann auch als Innenlüfter bezeichnet werden. Dabei wird das Kühlmedium aus bestimmten Bereichen des Gehäuses angesaugt und geführt in eine bestimmbare Richtung und damit auf bestimmte Bauteile gerichtet ausgeblasen. Über einen solchen Leitring ist zudem das Ausbilden von Kurzschlusswirbeln weiter reduzierbar. Ferner ist durch ein solches Leitrad das aus dem Lüfter austretende Kühlmedium gezielt auf bestimmte Bereiche wie beispielsweise den Kurzschlussring oder die Wickelköpfe, insbesondere die Zwischenräume zwischen den Wickelköpfen und dem Stator, richtbar. Je nach Form des Leitrings ist die Durchströmung des Lüfters veränderbar, d.h. insbesondere dass beispielsweise die Ansaug- bzw. Ausblasrichtung des Lüfters von radial bis axial kontinuierlich veränderbar ist. Der Leitring weist eine konusförmige Innenfläche auf. Dadurch wird das Kühlmedium im Lüfter sowohl in axialer als auch radialer Richtung beschleunigt und somit unter einem vordefinierbaren Winkel zur Achse der elektrischen Maschine, beispielsweise in Abhängigkeit vom Neigungswinkel der konusförmigen Innenfläche, ausgeblasen. Durch die axiale Komponente wird das zügige Durchströmen des Gehäuses verbessert und die Zufuhr von frischem Kühlmedium erhöht sowie die Gefahr von Kurzschlussströmungen reduziert. Gemäss Anspruch 1 ist die erste Öffnung derart im Gehäuse angeordnet, dass das Kühlmedium vom Lüfter im Wesentlichen in radialer Richtung angesaugt wird. Eine solche Strömungsführung wird dadurch bewirkt, dass die sich in Umfangsrichtung erstreckende erste Öffnung im Umfang des Gehäuses angeordnet ist. Dadurch wird das Kühlmedium im Wesentlichen radial angesaugt und im Wesentlichen radial über die zweite Öffnung, welche am Umfang angeordnet ist, ausgeblasen. Über eine mehr oder weniger stark ausgebildete axiale Komponente der Strömung werden Kurzschlussströmungen reduziert. Eine radiale Ansaugung des Kühlmittels ist alternativ beispielsweise derart ausgestaltbar, dass die ersten Öffnungen im Bereich des Kurzschlussrings angeordnet sind und das Kühlmedium in axialer Richtung über zweite Öffnungen, welche an der Stirnseite des Gehäuses angeordnet sind, ausgeblasen wird (nicht Teil der beanspruchten Erfindung). Gemäss Anspruch 2 ist die erste Öffnung derart angeordnet, dass die Ansaugrichtung im Wesentlichen axial verläuft. Beispielsweise kann eine solche Strömungsausbildung dadurch geschaffen werden, dass die erste Öffnung an der Stirnseite des Gehäuses angeordnet ist. Die zweite Öffnung ist im Gehäuse im Bereich der Zwischenräume angeordnet. Somit wird das vom Lüfter geförderte Kühlmedium, welches die Zwischenräume vorwiegend in radialer Richtung durchströmt, zügig aus dem Gehäuse geleitet. Besonders bevorzugt ist eine solche Ausgestaltung derart ausgeführt, dass die zweite Öffnung radial außerhalb der Zwischenräume angeordnet ist, so dass das die Zwischenräume durchströmende Kühlmedium zum Durchströmen der zweiten Öffnung nur unwesentlich umgelenkt wird. Dadurch wird ein besonderes strömungsoptimiertes Ausströmen des Kühlmediums aus dem Gehäuse geschaffen, was den Luftdurchsatz und somit die Wärmeabfuhr verbessert.

Vorzugsweise besteht die erste und/oder die zweite Öffnung aus mehreren Teilöffnungen. Beispielsweise erstrecken sich die erste und die zweite Öffnung über entsprechende Teilbereiche des Gehäuseumfangs. Hierzu ist das Gehäuse beispielsweise in Segmente mit entsprechender Größe teilbar, welche jeweils eine erste und/oder zweite Öffnung aufweisen. Eine solche Ausbildung ist unabhängig davon, ob die Öffnungen stirnseitig oder umfangsseitig am Gehäuse angeordnet sind. Somit wird vorwiegend ein Strömungsbild geschaffen, in welchem das Kühlmedium in eine Teilöffnung der ersten Öffnung eintritt und über die entsprechende Teilöffnung der zweiten Öffnung aus dem Gehäuse austritt.

Weiter vorzugsweise ist die elektrische Maschine derartig ausgebildet, dass an jeder der beiden Stirnseiten des Rotors ein Lüfter angeordnet ist. Dabei weist die elektrische Maschine vorzugsweise an jeder der beiden Stirnseiten ein Gehäuse mit erster und zweiter Öffnung auf. Dabei ist unabhängig, ob ein Gehäuse einstückig mit dem Stator oder als separates Bauteil ausgebildet ist.

Weiter vorzugsweise weist die Welle der elektrischen Maschine, auf welcher der Rotor angeordnet ist, beidseitig einen An- und/oder Abtrieb auf. Je nach Ausgestaltung der elektrischen Maschine ist diese als Motor und/oder Generator betreibbar. Entsprechend weist die Welle an ihren Enden einen Antrieb und/oder einen Abtrieb auf. Alternativ ragt die Welle nur an einer Seite der beiden Stirnseiten aus dem Gehäuse und bildet einen An- und/oder Abtrieb.

Weitere Merkmale und Vorteile der Erfindung ergeben sich aus den nachfolgenden Ausführungsbeispielen in Verbindung mit den Figuren. Dabei zeigt:
- Figur 1:: eine elektrische Maschine gemäß dem Stand der Technik;
- Figur 2:: eine Schnittdarstellung einer elektrischen Maschine gemäß Figur 1;
- Figur 3:: eine erste Ausführungsform einer erfindungsgemäßen elektrischen Maschine;
- Figur 4:: einen Rotor einer erfindungsgemäßen elektrischen Maschine;
- Figur 5:: einen Stator einer erfindungsgemäßen elektrischen Maschine;
- Figur 6:: eine Schnittdarstellung einer elektrischen Maschine gemäß Figur 3; und
- Figur 7:: eine zweite Ausführungsform einer erfindungsgemäßen elektrischen Maschine.

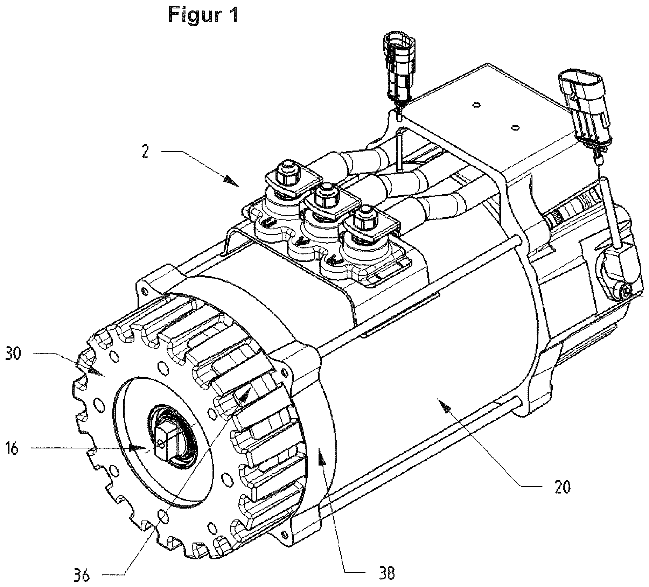

In Figur 1 ist eine perspektivische Darstellung einer elektrischen Maschine 2 aus dem Stand der Technik gezeigt. Die elektrische Maschine 2 weist einen nicht dargestellten Rotor 10, welcher auf einer Welle 16 angeordnet ist, und einen Stator 20 auf. Ein Gehäuse 30 ist über einen Zentrierbund 38 mit dem Stator 20 verbunden. Das Gehäuse 30 mit axialen Lüftungsschlitzen 36 ist dabei stirnseitig am Stator 20 angeordnet und dient als Aufnahme für ein Lager der Welle 16.

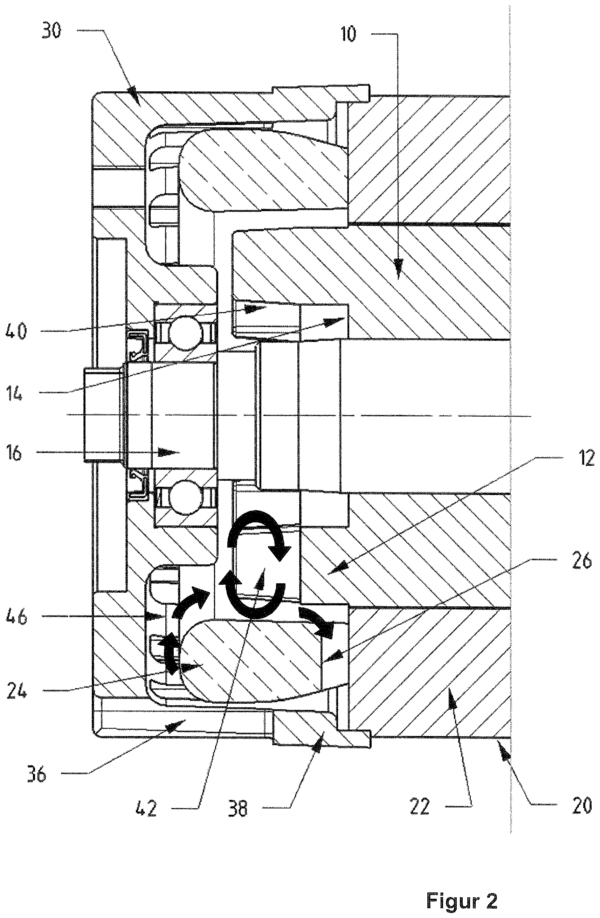

In Figur 2 ist ein Strömungsbild eines Kühlmediums 46 durch das Gehäuse 30 schematisch dargestellt. Das Gehäuse 30 weist am Umfang angeordnete axiale Lüftungsschlitze 36 auf. Von einem an der Stirnseite 14 des Rotors 10 angeordneten Lüfter 40 wird im Betrieb der elektrischen Maschine 2 Luft als Kühlmedium 46 durch die axialen Lüftungsschlitze 36 angesaugt. Der Lüfter 40 weist sich in Radialrichtung erstreckende Flügel 42 auf. Das Kühlmedium 46 wird um Wickelköpfe 24 des Stators 20 herumgefördert und durch Zwischenräume 26 zwischen dem Stator 20 mit Statorwicklungen 22 und den Wickelköpfen 24 über die axialen Lüftungsschlitze 36 ausgeblasen. Somit dienen die axialen Lüftungsschlitze 36 sowohl als Einlass als auch als Auslass für das Kühlmedium 46 im Gehäuse 30. Wie in Figur 2 gezeigt, wird aufgrund der strömungsmechanischen Ausgestaltung des Gehäuses 30 sowie der umströmten Bauteile ein Großteil der geförderten Luft als Kurzschlussströmung im Bereich des Lüfters 40 umgewälzt. Diese Kurzschlussströmung leistet nur einen geringen Beitrag zur Wärmeabfuhr von den Wickelköpfen 24 sowie dem Kurzschlussring 12 des Rotors 10.

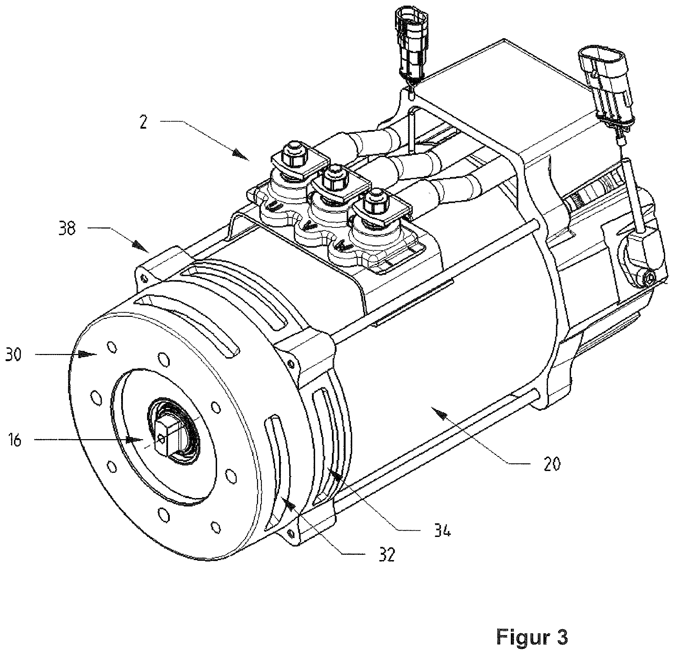

In Figur 3 ist eine erste Ausführungsform einer erfindungsgemäßen elektrischen Maschine 2 gezeigt. Abweichend von der in Figur 1 dargestellten elektrischen Maschine 2 weist die erfindungsgemäße elektrische Maschine 2 gemäß Figur 3 keine axialen Lüftungsschlitze 36 auf. Im Gehäuse 30 sind stattdessen in Umfangsrichtung ausgebildete erste und zweite Öffnungen 32, 34 vorhanden. Diese ersten und zweiten Öffnungen 32, 34 sind in sich entsprechenden Bereichen des Umfangs ausgebildet, so dass sich eine optimale Strömung von einer der ersten Öffnungen 32 zu einer entsprechenden zweiten Öffnung 34 ausbildet.

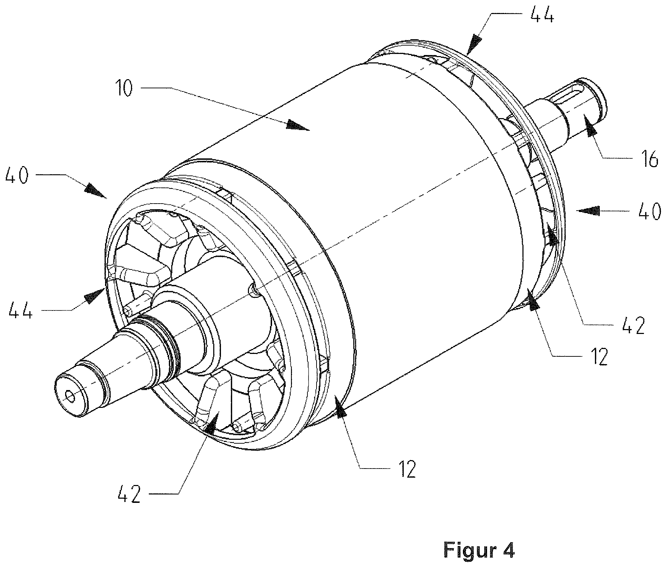

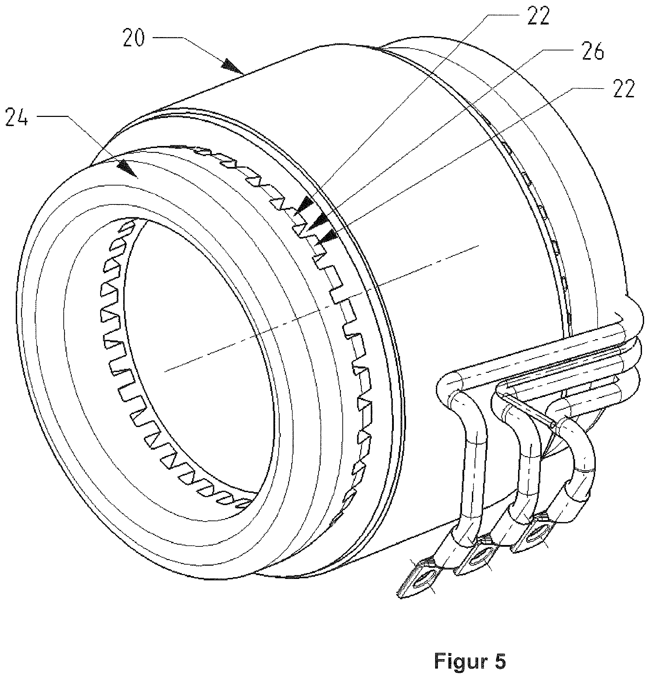

Ferner weist der auf der Welle 16 angeordnete Rotor 10 der erfindungsgemäßen elektrischen Maschine 2, wie in Figur 4 gezeigt, an beiden Stirnseiten einen Lüfter 40 mit sich radial erstreckenden Flügeln 42 und einen umlaufenden Leitring 44 auf. Ein solcher Lüfter 40 kann auch als Innenlüfter bezeichnet werden. Der Innenlüfter ist einstückig mit dem Kurzschlussring 12 des Rotors 10 ausgebildet. Über den konusförmig ausgebildeten Leitring 44 bildet sich eine geführte Strömung des Kühlmediums 46 durch den Lüfter 40 aus. Hierdurch wird unter anderem eine Kurzschlussströmung innerhalb des Lüfters 40 vermieden. Zudem ist die geführt austretende Strömung des Kühlmediums 46 aus dem Lüfter 40 auf die Zwischenräume 26 zwischen dem Stator 20 und den Statorwicklungen 22 im Bereich der Wickelköpfe 24, wie in Figur 5 gezeigt, gerichtet. Somit wird an den temperaturkritischen Bereichen der elektrischen Maschine 2 wie den Wickelköpfen 24 und dem Kurzschlussring 12 ein hoher Durchsatz des Kühlmediums 46 mit hohen Strömungsgeschwindigkeiten erzeugt.

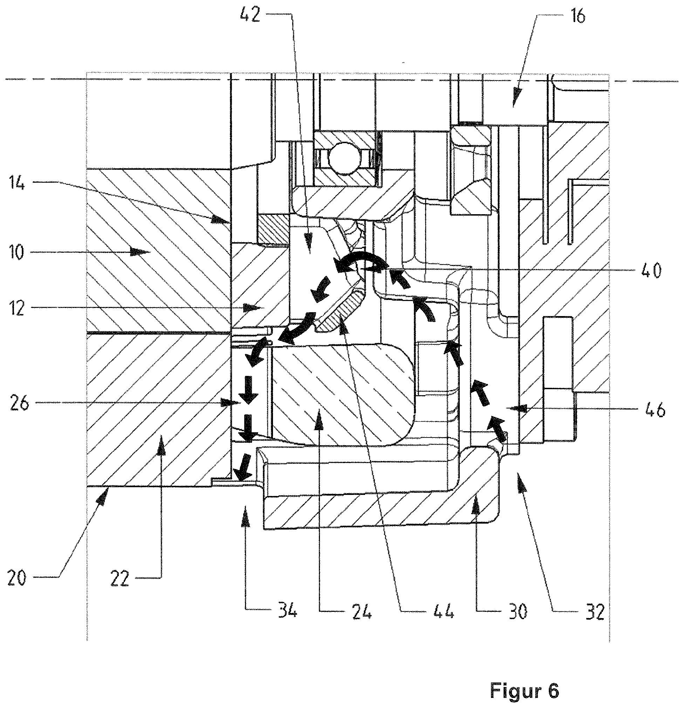

Ein Strömungsbild des Kühlmediums 46 einer erfindungsgemäßen elektrischen Maschine 2 ist in der Schnittdarstellung der Figur 6 dargestellt. Dabei wird das Kühlmedium 46 vom Lüfter 40 über die ersten Öffnungen 32 im Wesentlichen radial angesaugt. Der Lüfter 40 mit dem Leitring 44 fördert das Kühlmedium 46 gezielt auf temperaturkritische Bereiche der Wickelköpfe 24 sowie des Kurzschlussrings 12. Über die Zwischenräume 26 zwischen den Wickelköpfen 24 und dem Stator 20 wird das Kühlmedium 46 radial abgeführt. Die zweiten Öffnungen 34, über welche das Kühlmedium 46 aus dem Gehäuse 30 austritt, sind in radialer Richtung in unmittelbarer Nähe der Zwischenräume 26 strömungsgünstig angeordnet. Durch die hier gezeigte strömungsgünstig gestaltete Luftführung wird ein hoher Durchsatz des Kühlmediums 46 durch die zu kühlenden Bereiche der elektrischen Maschine 2 geschaffen. Zudem wird durch die entsprechende Gestaltung des durchströmten Bereichs das Kühlmedium 46 zügig, insbesondere ohne große Verwirbelungen, durch das Gehäuse 30 geleitet.

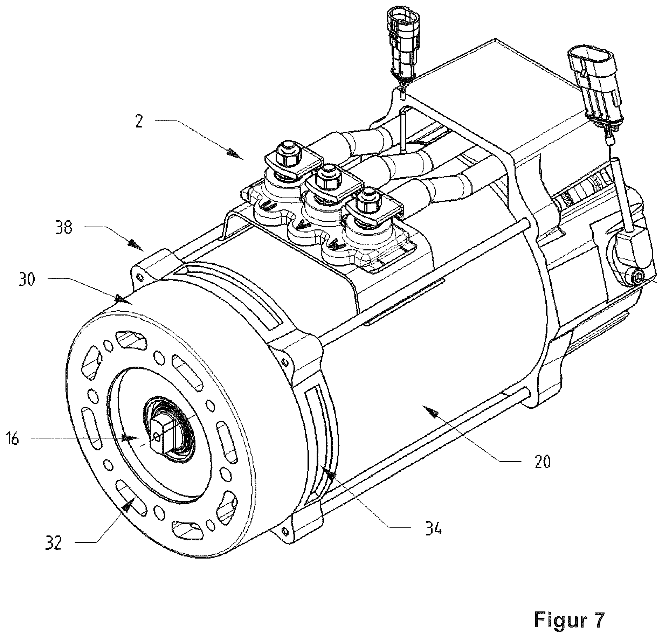

In Figur 7 ist eine zweite Ausführungsform einer erfindungsgemäßen elektrischen Maschine 2 dargestellt. Abweichend von der in Figur 3 dargestellten elektrischen Maschine sind die ersten Öffnungen 32 nicht am Umfang des Gehäuses 30 sondern stirnseitig am Gehäuse 30 angeordnet. Die ersten Öffnungen 32 sind dabei ebenfalls entlang eines Teilkreises in Umfangsrichtung ausgebildet. Somit wird das Kühlmedium 46 vom Lüfter 40 im Wesentlichen in axialer Richtung angesaugt. Eine solche Ausführungsform erweist sich in bestimmten Einbauzuständen mit entsprechenden bauraumbedingten Randbedingen als vorteilhaft. Ferner vorteilhaft bei einer solchen Ausgestaltung ist der größere Abstand zwischen den ersten und zweiten Öffnungen 32, 34, was zu einem größeren Durchsatz an frischem Kühlmedium 46 führt, da das Ansaugen von austretendem Kühlmedium 46 reduziert wird.

### Bezugszeichenliste

- 2: elektrische Maschine
- 10: Rotor
- 12: Kurzschlussring
- 14: Stirnseite des Rotors
- 16: Welle
- 20: Stator
- 22: Statorwicklung
- 24: Wickelköpfe
- 26: Zwischenraum
- 30: Gehäuse
- 32: erste Öffnung
- 34: zweite Öffnung
- 36: axialer Lüftungsschlitz
- 38: Zentrierbund
- 40: Lüfter
- 42: Flügel
- 44: Leitring
- 46: Kühlmedium

## Patentansprüche

1. Elektrische Maschine (2) mit einem Rotor (10), einem Stator (20) mit umfänglich angeordneter Statorwicklung (22) aus einem elektrisch leitenden Material und einem Gehäuse (30), wobei stirnseitig am Rotor (10) ein Lüfter (40) angeordnet ist, der drehfest mit dem Rotor (10) verbunden ist und sich radial erstreckende Flügel (42) aufweist,
**dadurch gekennzeichnet,**
**dass** das Gehäuse eine erste und eine zweite sich in Umfangsrichtung erstreckende Öffnung (32, 34) aufweist und vom Lüfter (40) ein Kühlmedium (46) über die erste Öffnung (32) angesaugt und zügig an einem Kurzschlussring (12) des Rotors (10) vorbei durch Zwischenräume (26) zwischen den Wickelköpfen (24) der Statorwicklung (22) und dem Stator (20) über die zweite Öffnung (34) ausgeblasen wird;
**dass** der Lüfter (40) einen Leitring (44) aufweist, welcher in radialer Richtung außerhalb der Flügel (42) angeordnet ist und eine konusförmige Innenfläche aufweist;
**dass** die erste Öffnung (32) derart angeordnet ist, dass das Kühlmedium (46) vom Lüfter (40) im Wesentlichen in radialer Richtung angesaugt wird; und
**dass** die zweite Öffnung (34) im Gehäuse (30) im Bereich der Zwischenräume (26) derart angeordnet ist, dass das Kühlmedium (46) aus den Zwischenräumen (26) radial abströmt.

2. Elektrische Maschine (2) mit einem Rotor (10), einem Stator (20) mit umfänglich angeordneter Statorwicklung (22) aus einem elektrisch leitenden Material und einem Gehäuse (30), wobei stirnseitig am Rotor (10) ein Lüfter (40) angeordnet ist, der drehfest mit dem Rotor (10) verbunden ist und sich radial erstreckende Flügel (42) aufweist,
**dadurch gekennzeichnet,**
**dass** das Gehäuse eine erste und eine zweite sich in Umfangsrichtung erstreckende Öffnung (32, 34) aufweist und vom Lüfter (40) ein Kühlmedium (46) über die erste Öffnung (32) angesaugt und zügig an einem Kurzschlussring (12) des Rotors (10) vorbei durch Zwischenräume (26) zwischen den Wickelköpfen (24) der Statorwicklung (22) und dem Stator (20) über die zweite Öffnung (34) ausgeblasen wird;
**dass** der Lüfter (40) einen Leitring (44) aufweist, welcher in radialer Richtung außerhalb der Flügel (42) angeordnet ist und eine konusförmige Innenfläche aufweist;
**dass** die erste Öffnung (32) derart angeordnet ist, dass das Kühlmedium (46) vom Lüfter (40) im Wesentlichen in axialer Richtung angesaugt wird; und
**dass** die zweite Öffnung (34) im Gehäuse (30) im Bereich der Zwischenräume (26) derart angeordnet ist, dass das Kühlmedium (46) aus den Zwischenräumen (26) radial abströmt.

3. Elektrische Maschine (2) nach einem der vorherigen Ansprüche, **dadurch gekennzeichnet, dass** die erste und/oder die zweite Öffnung (32, 34) aus mehreren Teilöffnungen besteht.

4. Elektrische Maschine nach einem der vorherigen Ansprüche, **dadurch gekennzeichnet, dass** an jeder der beiden Stirnseiten (14) des Rotors (10) ein Lüfter (40) angeordnet ist.

5. Elektrische Maschine nach einem der vorherigen Ansprüche, **dadurch gekennzeichnet, dass** eine Welle (16), auf welcher der Rotor (10) angeordnet ist, beidseitig einen An- und/oder Abtrieb aufweist.

## Claims

1. Electrical machine (2) comprising a rotor (10), a stator (20) with a circumferentially arranged stator winding (22) which is composed of an electrically conductive material, and a housing (30), wherein a fan (40) which is connected to the rotor (10) in a rotationally fixed manner and has radially extending vanes (42) is arranged on an end side of the rotor (10),
**characterized**
**in that** the housing has a first opening (32) and a second opening (34) which extends in the circumferential direction, and a cooling medium (46) is drawn in by the fan (40) via the first opening (32) and is quickly blown out past a short-circuiting ring (12) of the rotor (10) through intermediate spaces (26) between the end windings (24) of the stator winding (22) and the stator (20) via the second opening (34);
**in that** the fan (40) has a conducting ring (44) which is arranged outside the vanes (42) in the radial direction and has a conical inner face;
**in that** the first opening (32) is arranged in such a way that the cooling medium (46) is drawn in by the fan (40) substantially in the radial direction; and
**in that** the second opening (34) is arranged in the housing (30) in the region of the intermediate spaces (26) in such a way that the cooling medium (46) flows radially out of the intermediate spaces (26).

2. Electrical machine (2) comprising a rotor (10), a stator (20) with a circumferentially arranged stator winding (22) which is composed of an electrically conductive material, and a housing (30), wherein a fan (40) which is connected to the rotor (10) in a rotationally fixed manner and has radially extending vanes (42) is arranged on an end side of the rotor (10),
**characterized**
**in that** the housing has a first opening (32) and a second opening (34) which extends in the circumferential direction, and a cooling medium (46) is drawn in by the fan (40) via the first opening (32) and is quickly blown out past a short-circuiting ring (12) of the rotor (10) through intermediate spaces (26) between the end windings (24) of the stator winding (22) and the stator (20) via the second opening (34);
**in that** the fan (40) has a conducting ring (44) which is arranged outside the vanes (42) in the radial direction and has a conical inner face;
**in that** the first opening (32) is arranged in such a way that the cooling medium (46) is drawn in by the fan (40) substantially in the axial direction; and
**in that** the second opening (34) is arranged in the housing (30) in the region of the intermediate spaces (26) in such a way that the cooling medium (46) flows radially out of the intermediate spaces (26).

3. Electrical machine (2) according to either of the preceding claims, **characterized in that** the first and/or the second opening (32, 34) consist/consists of a plurality of partial openings.

4. Electrical machine according to one of the preceding claims, **characterized in that** a fan (40) is arranged on each of the two end sides (14) of the rotor (10).

5. Electrical machine according to one of the preceding claims, **characterized in that** a shaft (16) on which the rotor (10) is arranged has a drive and/or output drive on both sides.

## Revendications

1. Machine électrique (2), avec un rotor (10), un stator (20) avec un enroulement de stator (22) disposé sur la circonférence, en matériau électriquement conducteur, et avec un carter (30), un ventilateur (40) étant disposé côté frontal sur le rotor (10), qui est raccordé, bloqué en rotation, au rotor (10) et qui présente des ailettes (42) s'étendant radialement,
**caractérisée en ce que**
le carter présente une première et une deuxième ouverture (32, 34) s'étendant dans la direction circonférentielle, et un agent de refroidissement (46) étant aspiré par le ventilateur (40) via la première ouverture (32) et étant soufflé de façon continue pour passer devant un anneau de court-circuit (12) du rotor (10) à travers des espaces intermédiaires (26) entre les têtes d'enroulement (24) de l'enroulement de stator (22) et le stator (20) via la deuxième ouverture (34) ;
**en ce que** le ventilateur (40) présente une bague de guidage (44) qui est disposée dans la direction radiale à l'extérieur des ailettes (42) et présente une surface intérieure de forme conique ;
**en ce que** la première ouverture (32) est disposée de telle sorte que l'agent de refroidissement (46) est aspiré par le ventilateur (40) essentiellement dans la direction radiale ; et
**en ce que** la deuxième ouverture (34) est disposée dans le carter (30) dans la zone des espaces intermédiaires (26) de telle sorte que l'agent de refroidissement (46) s'écoule radialement à partir des espaces intermédiaires (26).

2. Machine électrique (2), avec un rotor (10), un stator (20) avec un enroulement de stator (22) disposé sur la circonférence, en matériau électriquement conducteur, et avec un carter (30), un ventilateur (40) étant disposé côté frontal sur le rotor (10), qui est raccordé, bloqué en rotation, au rotor (10) et qui présente des ailettes (42) s'étendant radialement,
**caractérisée en ce que**
le carter présente une première et une deuxième ouverture (32, 34) s'étendant dans la direction circonférentielle, et un agent de refroidissement (46) étant aspiré par le ventilateur (40) via la première ouverture (32) et étant soufflé de façon continue pour passer devant un anneau de court-circuit (12) du rotor (10) à travers des espaces intermédiaires (26) entre les têtes d'enroulement (24) de l'enroulement de stator (22) et le stator (20) via la deuxième ouverture (34) ;
**en ce que** le ventilateur (40) présente une bague de guidage (44) qui est disposée dans la direction radiale à l'extérieur des ailettes (42) et présente une surface intérieure de forme conique ;
**en ce que** la première ouverture (32) est disposée de telle sorte que l'agent de refroidissement (46) est aspiré par le ventilateur (40) essentiellement dans la direction axiale ; et
**en ce que** la deuxième ouverture (34) est disposée dans le carter (30) dans la zone des espaces intermédiaires (26) de telle sorte que l'agent de refroidissement (46) s'écoule radialement à partir des espaces intermédiaires (26).

3. Machine électrique (2) selon l'une des revendications précédentes, **caractérisée en ce que** la première et/ou la deuxième ouverture (32, 34) se compose de plusieurs ouvertures partielles.

4. Machine électrique selon l'une des revendications précédentes, **caractérisée en ce qu'**un ventilateur (40) est disposé sur chacun des deux côtés frontaux (14) du rotor (10).

5. Machine électrique selon l'une des revendications précédentes, **caractérisée en ce qu'**un arbre (16) sur lequel le rotor (10) est disposé présente des deux côtés une entrée et/ou sortie.
